# FASCICULE DE BREVET EUROPEEN

(11) **EP 1 564 352 B1**
(45) Date de publication et mention de la délivrance du brevet: **06.01.2010**
(21) Numéro de dépôt: 05300073.3
(22) Date de dépôt: 28.01.2005
(51) Int. Cl.: F01D 21/04

(54) **Turboréacteur dont l'arbre d'entraînement de la soufflante est supporté par deux paliers**
Lagerungsvorrichtung mit zwei Lagern für die Bläserwelle eines Turbostrahltriebwerks
Turbofan having a fan shaft supported by two bearings

(30) Priorité: 06.02.2004 FR 0401145
(43) Date de publication de la demande: 17.08.2005
(73) Titulaire: SNECMA, 75015 Paris (FR)
(72) Inventeur: Lapergue, Guy, 77950, Rubelles (FR); Servant, Régis, 91270, Vigneux sur Seine (FR); Bouchy, Gael, 77540, La Chapelle Iger (FR)
(74) Mandataire: David, Daniel

(56) Documents cités:
- EP-A- 1 013 896
- FR-A- 2 752 024
- US-A- 4 289 360
- US-A- 5 029 439
- US-A- 6 009 701

## Description

L'invention concerne le domaine des turboréacteurs et en particulier des moteurs avec soufflante solidaire d'un arbre d'entraînement qui est supporté par un premier palier et un deuxième palier.

Un tel turboréacteur comprend, d'amont en aval dans le sens de l'écoulement des gaz, une soufflante, un ou plusieurs étages de compresseurs, un ou plusieurs étages de turbines et une tuyère d'échappement des gaz. La soufflante comporte un rotor pourvu d'aubes à sa périphérie qui, lorsqu'elles sont mises en rotation, entraînent l'air dans le turboréacteur. Le rotor de soufflante est supporté par l'arbre du rotor basse pression du moteur. Il est centré sur l'axe du turboréacteur par un premier palier qui est en amont d'un deuxième palier relié à la structure fixe, notamment le carter intermédiaire.

Dans la suite de la description, dans la mesure où la soufflante est montée solidaire de l'arbre du compresseur, qui est l'arbre du rotor basse pression dans un moteur à double corps, on désigne cet arbre par l'unique terme arbre du compresseur.

Le premier palier est supporté par une pièce de support, formant une enveloppe autour de l'arbre du compresseur, orientée vers l'aval du premier palier et fixée à une structure fixe du turboréacteur. Le deuxième palier est supporté par une pièce de support fixée également à une structure fixe du turboréacteur.

Il peut se produire, accidentellement, la perte d'une aube de soufflante. Il s'ensuit un balourd important sur l'arbre du compresseur, qui entraîne des charges et des vibrations sur les paliers, transmises par leurs pièces de support aux structures fixes du turboréacteur, qui peuvent de ce fait être endommagées.

Pour prévenir un risque de détérioration trop important du turboréacteur on peut sur-dimensionner la structure ou comme dans le brevet FR 2, 752, 024 proposer un système de découplage du premier palier. La pièce de support du premier palier, est fixée à la structure du turboréacteur par des vis dites fusibles, comportant une portion affaiblie entraînant leur rupture en cas d'efforts trop importants. Ainsi, à l'apparition du balourd sur l'arbre du compresseur, les efforts induits sur le premier palier sont transmis aux vis fusibles qui cassent, découplant la pièce de support du premier palier de la structure du turboréacteur. Selon un mode de réalisation le support du deuxième palier est associé à celui du premier palier pour l'accompagner en cas de découplage. Les efforts provoqués par le balourd ne sont plus transmis à la structure fixe du turboréacteur par ces pièces de support.

Toutefois, après le découplage des paliers, la soufflante continue de tourner et l'arbre du compresseur peut ne plus tourner sur son axe et subir des débattements importants pouvant endommager la structure fixe du turboréacteur. Le brevet FR 2, 752, 024 propose dans ce cas de prévoir, sur la structure fixe du turboréacteur, une nervure entourant la pièce de support des deux paliers et remplissant une fonction d'arrêt axial et de palier de secours.

Toutefois dans ce cas, le palier de secours est radialement très éloigné des paliers d'origine, ce qui modifie complètement la répartition des contraintes sur les divers éléments du moteur.

La solution proposée par le brevet US 6,009,701 permet de contrôler partiellement les débattements radiaux en cas de découplage.

Enfin, le deuxième palier pouvant assurer, dans certains cas, le maintien de l'arbre du compresseur après découplage du premier palier, il n'est pas nécessaire que les deux paliers soient découplés simultanément de façon systématique, car il est toujours préférable de conserver le turboréacteur dans des configurations les plus proches de la normale.

La présente invention vise à pallier ces inconvénients.

A cet effet, l'invention concerne un turboréacteur, comprenant une structure fixe, un rotor de soufflante, solidaire d'un arbre d'entraînement supporté par un premier palier et un deuxième palier, caractérisé par le fait qu'il comprend des moyens formant retenue axiale du rotor de la soufflante et/ou palier de secours, coopérant avec des moyens de la structure fixe, et montés solidaires de l'arbre d'entraînement.

De préférence, le turboréacteur comprenant un flasque structurel sur lequel est fixé le deuxième palier, les moyens formant retenue axiale de la soufflante et/ou palier de secours comportent un disque de retenue, monté sur l'arbre d'entraînement et coopérant avec un disque d'arrêt du flasque pour la retenue axiale de la soufflante et un manchon longitudinal du flasque pour former palier de secours.

De préférence encore, les moyens formant retenue axiale de la soufflante et/ou palier de secours sont agencés pour transmettre les efforts axiaux directement à l'arbre d'entraînement. En effet si tel n'était pas le cas, lors d'une retenue axiale de la soufflante les efforts engendrés sur les pièces de support des paliers pourraient se propager le long de la pièce de support du deuxième palier et entraîner la rupture de l'écrou de blocage du deuxième palier sur l'arbre du compresseur. Cette rupture annulerait la retenue axiale du deuxième palier sur l'arbre du compresseur. La soufflante continuant de tourner, elle entraînerait l'arbre du compresseur vers l'avant, qui pourrait glisser dans le deuxième palier non retenu axialement, ainsi que sur les autres éléments emmanchés à ce niveau. Il s'ensuivrait une expulsion de la soufflante hors du turboréacteur, ayant des conséquences désastreuses.

Avantageusement, le deuxième palier comprend une bague interne, une bague externe et des rouleaux montés entre lesdites bagues, le disque de retenue comporte des dents radiales, en appui axial sur des dents de l'arbre d'entraînement et bloquées en rotation par des dents longitudinales de la bague interne du deuxième palier.

L'invention sera mieux comprise grâce à la description suivante de la forme de réalisation préférée du turboréacteur de l'invention, en référence aux dessins annexés, sur lesquels :
- la figure 1 représente une vue en coupe axiale, de profil, de la forme de réalisation préférée de l'invention ;
- la figure 2 représente une vue agrandie de la zone de la figure 1 contenue dans le cadre C ;
- la figure 3 représente une vue arrière en perspective de l'arbre du compresseur et du flasque structurel de la forme de réalisation préférée de l'invention ;
- la figure 4 représente une vue arrière en perspective éclatée de l'arbre du compresseur, du flasque structurel et de l'anneau de retenue de la forme de réalisation préférée de l'invention ;
- la figure 5 représente une vue arrière en perspective éclatée de l'arbre du compresseur, du flasque structurel, de l'anneau de retenue et de la bague interne du deuxième palier de la forme de réalisation préférée de l'invention ;
- la figure 6 représente une vue arrière en perspective éclatée de l'arbre du compresseur, du flasque structurel, de l'anneau de retenue, de la bague interne du deuxième palier et du support de deuxième palier de la forme de réalisation préférée de l'invention ;
- la figure 7 représente une vue en perspective schématique du montage de la bague externe dans le support de deuxième palier de la forme de réalisation préférée de l'invention ;
- la figure 8 représente une vue en perspective du flasque structurel de la forme de réalisation préférée de l'invention ;
- la figure 9 représente une vue en coupe de profil schématique du deuxième palier de la forme de réalisation préférée de l'invention, après rupture de l'arbre du compresseur, et
- la figure 10 représente une vue en coupe d'une autre forme de réalisation de l'invention.

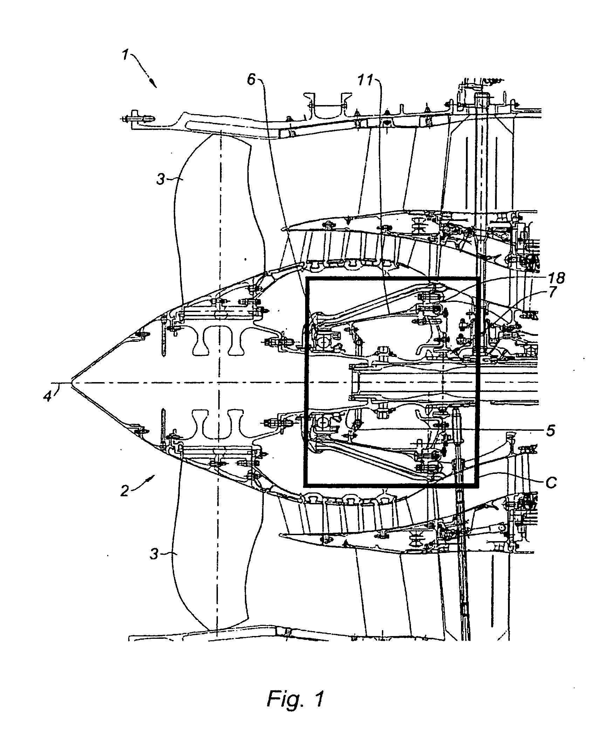

En référence à la figure 1, le turboréacteur de l'invention comprend une soufflante 2, dont le rotor comporte des aubes 3 s'étendant radialement autour de l'axe 4 du turboréacteur. L'arbre de soufflante 2 est fixé, en aval des aubes 3, à l'arbre du compresseur 5 de forme globalement cylindrique. Il s'agit ici de l'arbre du compresseur basse pression. On désignera dans la suite l'ensemble de l'arbre de la soufflante 2 et de l'arbre du compresseur 5 par arbre du compresseur 5, ou arbre d'entraînement 5. L'arbre du compresseur 5 est supporté par un premier palier 6 et un deuxième palier 7, situé en aval du premier palier 6.

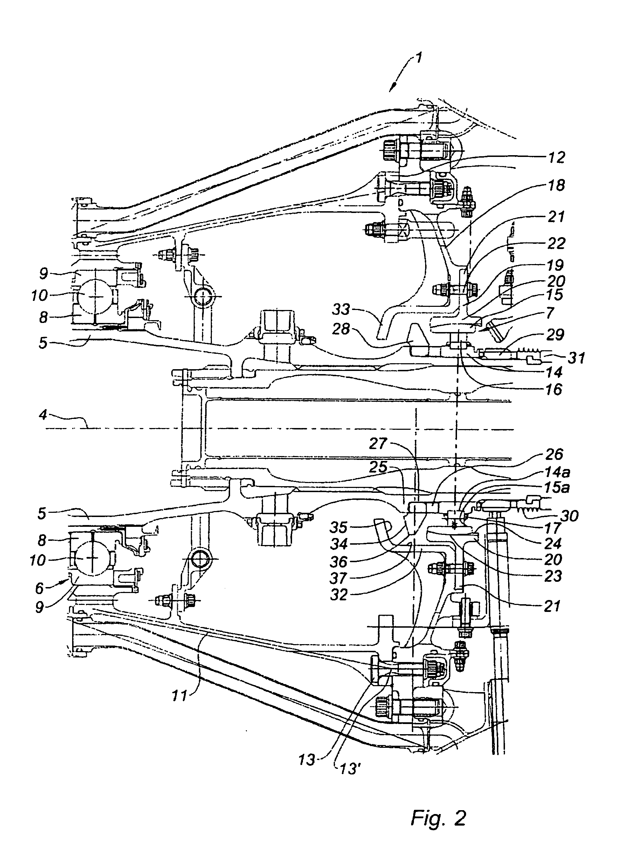

En référence à la figure 2, le premier palier 6 comporte une bague interne 8 et une bague externe 9, entre lesquelles sont montés des billes 10. La bague interne 8 est montée solidaire de l'arbre du compresseur 5 et la bague externe solidaire d'une pièce support de palier 11, appelée dans la suite support du premier palier 11. Les billes 10 autorisent la rotation de la bague interne 8, donc de l'arbre du compresseur 5, par rapport à la bague externe 9, donc au support du premier palier 11.

Le support du premier palier 11 s'étend, à partir du premier palier 6, vers l'aval ; il est de forme globalement cylindrique, légèrement conique, son diamètre augmentant vers l'aval. Il est monté sur un flasque 18 de la structure fixe du turboréacteur 1, solidaire notamment du carter intermédiaire de ce dernier, et nommé par la suite flasque structurel 18, par une bride aval 12 dans laquelle sont vissées des vis fusibles 13. Ces vis fusibles 13 comprennent une portion affaiblie 13', présentant une résistance faible à la traction entraînant leur rupture en cas d'efforts trop importants, notamment lors de l'apparition d'un balourd sur l'arbre du compresseur 5 suite notamment à la perte d'une aube 3.

Le deuxième palier 7 comporte une bague interne 14 et une bague externe 15, entre lesquelles sont montés des rouleaux 16. La bague interne 14 est montée solidaire de l'arbre du compresseur 5 et la bague externe 15 est montée solidaire de la structure fixe du turboréacteur 1 en régime de fonctionnement normal, comme il sera décrit plus loin. Les rouleaux 16 sont montés parallèles à l'axe 4 du turboréacteur 1, dans une rainure 14a s'étendant à la circonférence de la bague interne 14, et sont tenus espacés les uns des autres par une cage 17, bien connue de l'homme du métier. Ils permettent la rotation de la bague interne 14 par rapport à la bague externe 15, et donc par leur intermédiaire de l'arbre du compresseur 5 par rapport à la structure fixe du turboréacteur 1.

Le deuxième palier 7 est supporté par une pièce support de palier 19, nommée la suite support de deuxième palier 19, comprenant un logement 20, ou bague 20, venant enserrer la bague externe 15 du deuxième palier 7, à la circonférence de laquelle s'étend radialement une bride de fixation 21, vissée au flasque structurel 18 par des vis fusibles 22.

La bague externe 15 du deuxième palier 7 comporte une surface externe 23, de forme sphérique convexe, en vue en coupe axiale. Cette surface sphérique convexe 23 vient s'ajuster sur la surface interne 24 de la bague 20 du support de deuxième palier 19, de forme sphérique concave. Les deux surfaces sphériques, convexe 23 et concave 24, forment entre elles une liaison formant rotule (23, 24). Elles sont agencées de façon à ce qu'en fonctionnement normal du turboréacteur 1, la liaison formant rotule (23, 24) ne tourne pas. La bague externe 15 du deuxième palier 7 est alors fixe par rapport au support de deuxième palier 19 et donc aux parties fixes du turboréacteur 1. Son comportement en cas de perte d'une aube 3 sera décrit plus tard.

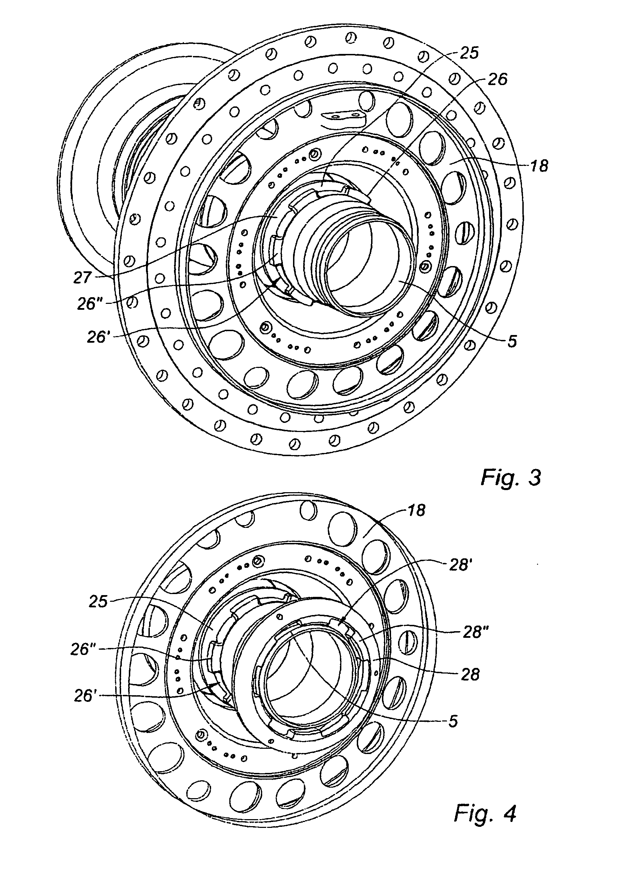

La description de la structure des éléments du turboréacteur 1 dans la région du deuxième palier 7 va être faite dans le cadre d'une description du montage de ses éléments, en référence aux figures 3 à 6, ce qui aidera à la compréhension de leur agencement.

En référence à la figure 3, l'arbre du compresseur 5 comporte, au droit du flasque structurel 18, deux portions annulaires en saillie, amont 25 et aval 26, formant une gorge annulaire 27. La portion en saillie 26 comporte des encoches 26' radiales, formant donc entre elles des dents 26". Les dents 26" et les encoches 26' sont de préférence de dimensions circonférentielles égales et s'étendent donc sur la moitié de la circonférence de l'arbre du compresseur 5, en cumulé pour chacune des catégories.

En référence à la figure 4, un disque de retenue 28 est monté dans la gorge annulaire 27 de l'arbre du compresseur 5. Ce disque de retenue 28 comporte, sur son bord radial interne, des encoches 28' et des dents 28" radiales dont les dimensions circonférentielles correspondent à celles des encoches 26' et des dents 26" de l'arbre du compresseur 5. Au montage, le disque de retenue 28 est emmanché sur l'arbre du compresseur 5 vers l'amont ; ses dents 28" sont passées dans les encoches 26' de l'arbre du compresseur 5, jusqu'à venir en butée sur la surface aval de la portion annulaire en saillie amont 25 de l'arbre du compresseur 5 ; le disque de retenue 28 est alors tourné autour de l'axe 4 du turboréacteur 1, jusqu'à ce que ses dents 28" soient axialement alignées avec les dents de l'arbre du compresseur 5 ; elles sont dans cette position enserrées entre la surface aval de la portion annulaire en saillie amont 25 et la surface amont des dents 26" de l'arbre du compresseur 5, tandis que les encoches 26', 28' de l'arbre du compresseur 5 et du disque de retenue 28 sont axialement alignées.

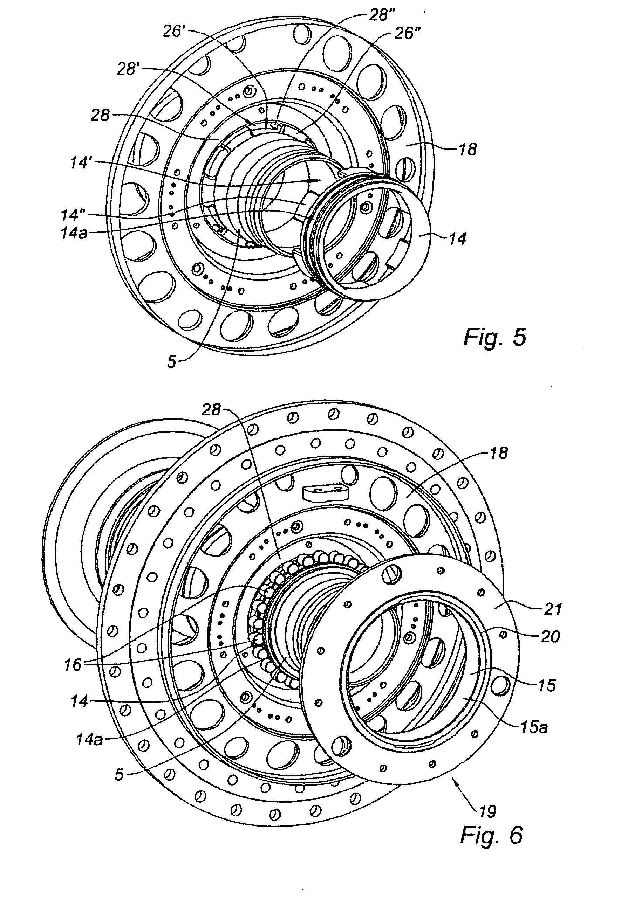

En référence à la figure 5, la bague interne 14 du deuxième palier 7 comporte, sur sa portion amont, des encoches 14' et des dents 14" longitudinales, dont les dimensions circonférentielles correspondent aux dimensions circonférentielles des encoches 26', 28' et des dents 26", 28" précédemment évoquées. La bague interne 14 est emmanchée sur l'arbre du compresseur 5 et ses dents 14" sont insérées dans les encoches 26', 28' de l'arbre du compresseur 5 et du disque de retenue 28, jusqu'à venir en butée sur la surface aval de la portion annulaire en saillie amont 25 de l'arbre du compresseur 5, la surface transversale de ses encoches 14' venant alors en butée sur les dents 26' de l'arbre du compresseur 5. Ainsi, les dents 14" de la bague interne 14 viennent bloquer en rotation le disque de retenue 28, dont les dents 28" sont en butée axiale sur les dents 26" de l'arbre du compresseur 5.

En référence à la figure 6, les rouleaux 16 sont montés sur la bague interne 14, dans la rainure 14a prévue à cet effet ; la cage 17 les maintenant les uns par rapport aux autres n'est pas représentée. La bague externe 15 du deuxième palier 7, montée dans le support de deuxième palier 19, est emmanchée autour des rouleaux 16 ; la surface interne 15a de la bague externe 15 est rectiligne, en vue en coupe axiale, de dimension longitudinale supérieure à celle des rouleaux 16. La bride 21 du support de deuxième palier 19 est fixée sur le flasque structurel 18, par les vis fusibles 22.

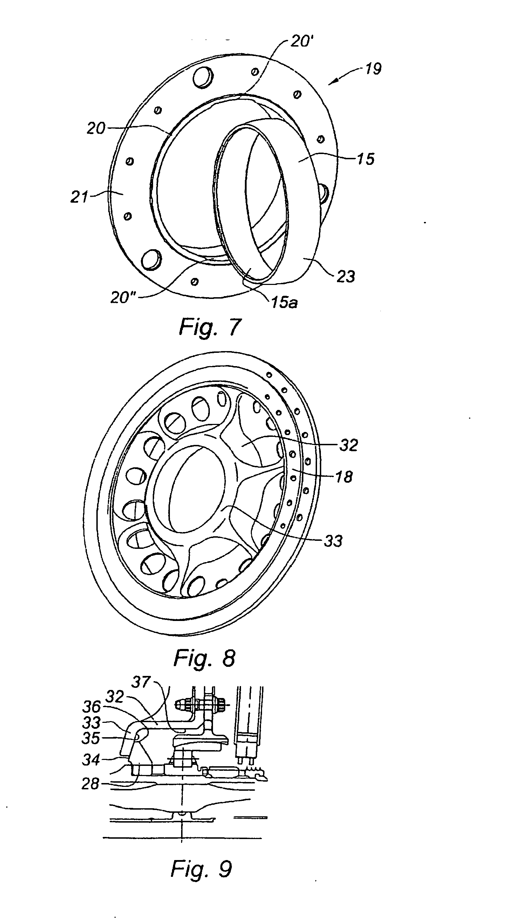

Le montage de la bague externe 15 du deuxième palier 7 dans la bague 20 du support de deuxième palier 19, afin de former la liaison formant rotule (23, 24), va maintenant être expliqué, en référence à la figure 7. La bague 20 du support de deuxième palier 19 comprend deux encoches de montage 20', 20" diamétralement opposées, dont la dimension circonférentielle correspond à la dimension longitudinale de la bague externe 15 du deuxième palier 7. La bague externe 15 est présentée de côté face au support de deuxième palier 19 et est glissée dans ses encoches 20', 20". Elle est alors tournée de 90° de façon à ce que sa surface externe 23 vienne en appui sur la surface interne 24 de la bague 20 du support de deuxième palier 19 et ainsi former la liaison formant rotule (23,24).

D'autres éléments peuvent être emmanchés sur l'arbre du compresseur 5 en aval de la bague interne 14 du deuxième palier 7. Par exemple ici, en référence aux figures 1 et 2, un dispositif 29 de prise de mouvement, pour entraîner d'autres éléments grâce au mouvement de l'arbre du compresseur 5, est prévu, ainsi qu'un joint 30 dit labyrinthe. Une fois tous les éléments emmanchés, l'ensemble est verrouillé axialement par un écrou de blocage 31.

En référence à la figure 8, le flasque structurel 18 est percé en son centre. Il comporte, dans sa partie centrale, un manchon longitudinal 32, à l'extrémité amont duquel s'étend, continûment et radialement vers l'intérieur, un disque d'arrêt 33, dont le bord interne constitue l'alésage central du flasque 18. Le disque d'arrêt 33 est agencé de façon à ce que la surface amont 34 du disque de retenue 28 puisse venir en appui sur sa surface aval 35. Les portées 34, 35 que constituent ces deux surfaces 34, 35 sont agencées de façon complémentaire, afin que l'appui de l'une sur l'autre se fasse de la façon la plus homogène qui soit. Dans la forme de réalisation ici décrite du turboréacteur 1 de l'invention, les portées 34, 35 sont de forme conique. Ces portées pourraient également être planes, ou avantageusement sphériques. La fonction du disque d'arrêt 33 est de bloquer axialement l'arbre du compresseur 5 en cas de rupture, afin que la soufflante 2 qui lui est solidaire ne soit pas entraînée vers l'avant dans ce cas, comme il sera expliqué plus loin.

Le fonctionnement du turboréacteur 1 de l'invention lors de la perte d'une aube 3 de soufflante 2 va maintenant être expliqué plus en détails.

La perte d'une aube 3 provoque un balourd sur l'arbre du compresseur 5. Les efforts induits provoquent la rupture des vis fusibles 13 de fixation du support de premier palier 11 sur le flasque structurel 18 et découplage de ce support 11 de la structure fixe du turboréacteur 1.

Le deuxième palier 7 n'est pas alors nécessairement découplé de la structure fixe du turboréacteur 1, la liaison formant rotule (23, 24) permettant d'absorber une certaine flexion de l'arbre du compresseur 5. En effet, on a vu que l'ajustement de la bague externe 15 du deuxième palier 7 dans la bague 20 du support de deuxième palier 19 est fait de façon à ce que la liaison formant rotule (23, 24) ainsi formée ne tourne pas en fonctionnement normal du turboréacteur 1, mais puisse tourner en cas de balourd sur l'arbre du compresseur 5. Ainsi, une flexion de l'arbre du compresseur 5 provoque la rotation de la liaison formant rotule (23, 24) autour du centre de la sphère définie par les surfaces sphériques 23, 24 qui la composent.

Si toutefois la flexion de l'arbre du compresseur 5 était trop importante, ou que cette flexion ne soit pas absorbable par une simple rotation de la liaison formant rotule (23, 24), notamment par exemple si la flexion se fait de façon décentrée par rapport à l'axe 4 du turboréacteur 1, les vis fusibles 22 de fixation du support de deuxième palier 19 au flasque structurel 18 cassent. Cette rupture autorise des déplacements radiaux du deuxième palier 7 et de son support 19. En outre, des déplacements longitudinaux sont autorisés par glissement axial des rouleaux 16 sur la surface interne 15a de la bague externe 15 du deuxième palier 7, dont la dimension longitudinal est plus grande que celle des rouleaux 16.

Ainsi, grâce à l'invention, la cinématique de découplage du premier palier 6 est autorisée au niveau du deuxième palier 7, sans que cela entraîne l'apparition de contraintes excessives sur les rouleaux 16, puisque des déplacements radiaux, longitudinaux et angulaires sont autorisés au niveau du deuxième palier 7. Les mouvements des pièces ne sont pas entravés.

Si toutefois les rouleaux 16 venaient à casser, le disque de retenue 28 peut, par sa surface externe radiale 36, venir en butée sur la surface interne 37 du manchon longitudinal 32 du flasque 18 ; ils remplissent ainsi une fonction de palier de secours. Dans le cas où une telle fonction est désirée pour ce disque 28 et ce manchon 32, la distance radiale entre la surface externe 36 du disque de retenue 28 et la surface interne 37 du manchon longitudinal 32 peut être dimensionnée en conséquence.

Une rupture de l'arbre du compresseur 5 peut cependant se produire, malgré les divers dispositifs de sécurité exposés ci-dessus. Un ultime dispositif de sécurité est alors prévu. En cas de rupture de l'arbre du compresseur 5, la rotation de la soufflante 2 entraîne cette dernière, avec l'arbre du compresseur 5 dont elle est solidaire, vers l'avant. La surface amont 34 du disque de retenue 28 vient alors en butée sur la surface aval 35 du disque d'arrêt 33, solidaire de la structure fixe du turboréacteur 1. Le disque d'arrêt 33 assure donc ici une fonction d'arrêt axial de la soufflante 2 en cas de rupture de l'arbre du compresseur 5 (ou de l'arbre de turbine dont l'arbre du compresseur 5 est solidaire). L'avantage d'une forme sphérique pour les deux portées 34, 35 du disque de retenue 28 et du disque d'arrêt 33, respectivement, est ici très clair : il permet un contact homogène quelle que soit l'inclinaison de l'arbre du compresseur 5 par rapport au flasque structurel 18 au moment du contact.

Au moment du contact et après ce dernier, les efforts sont transmis par le disque de retenue 28 à ses dents 28", qui les transmettent aux dents 26" de l'arbre du compresseur 5 et donc à l'arbre du compresseur 5. Ainsi, grâce à l'agencement du disque de retenue 28 et de la bague interne 14 du deuxième palier 7 sur l'arbre du compresseur 5, les efforts d'une retenue axiale de la soufflante 2 par le disque d'arrêt 33 ne sont pas transmis à l'écrou de blocage 31, transmission qui aurait des conséquences désastreuses, puisqu'une rupture de l'écrou de blocage 31 entraînerait le glissement des divers éléments emmanchés autour de l'arbre du compresseur 5 et l'expulsion vers l'avant de la soufflante 2 et de l'arbre du compresseur 5 ; ces efforts sont au contraire transmis à l'arbre du compresseur 5.

Le dispositif de l'invention permet donc d'assurer une retenue axiale de l'arbre du compresseur 5, donc de la soufflante 2, au niveau du deuxième palier 7, sans transmission des efforts de retenue à l'écrou de blocage 31 du deuxième palier 7.

Le dispositif de palier de secours et de retenue axiale du turboréacteur de l'invention a été décrit en combinaison avec la liaison formant rotule (23, 24) car leurs fonctions se complètent.

Il va de soi que le dispositif de l'invention, avec son disque de retenue 28 et son disque d'arrêt 33, agencés de façon à ce que leurs efforts de contact ne soient pas transmis à l'écrou de blocage 31, mais directement à l'arbre du compresseur 5, peut s'appliquer à tout type de turboréacteur, comportant un arbre du compresseur 5 soutenu par deux paliers 6, 7, quelle que soit la nature de ces deux paliers 6, 7.

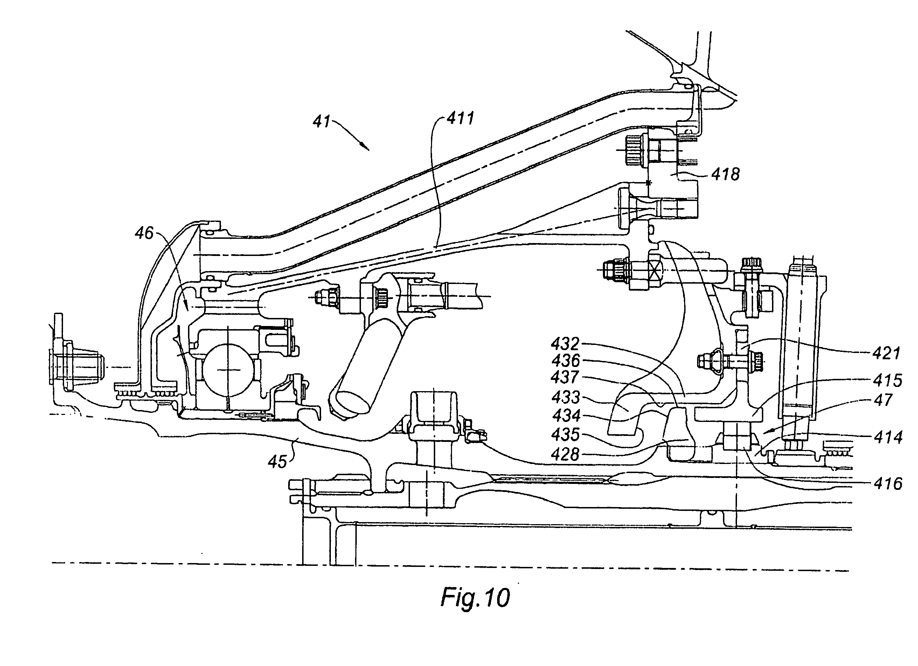

Par exemple, sur la figure 10, on voit un turboréacteur 41, quasiment similaire au turboréacteur 1 précédemment décrit. Il comprend notamment un arbre d'entraînement 45 supporté par un premier palier 46 et un deuxième palier 47. Le premier palier 46 est supporté par une pièce de support 411 fixée à un flasque 418, semblable au flasque 18 précédemment décrit. Le flasque 418 comporte également, dans sa partie centrale, un manchon longitudinal 432, à l'extrémité amont duquel s'étend, continûment et radialement vers l'intérieur, un disque d'arrêt 433, dont le bord interne constitue l'alésage central du flasque 418.

Le deuxième palier 47 comporte une bague interne 414 similaire à la bague interne 14 décrite plus haut, une bague externe 415, entre lesquelles sont montés des rouleaux 416. La bague externe 415 comporte, à sa périphérie externe, une bride de fixation 421, fixée au flasque 418. Un disque de retenue 428, similaire au disque de retenue 28 décrit plus haut, est monté sur l'arbre d'entraînement 45 de la même façon.

Le disque de retenue 428 est ici agencé de façon à ce que la distance radiale entre sa surface externe 436 et la surface interne 437 du manchon longitudinal 432 soit assez faible, afin que la fonction de palier de secours du disque de retenue 428 et du manchon longitudinal 432 soit bien assurée. Ainsi, si les rouleaux 416 viennent à casser, la surface externe 436 du disque de retenue 428 vient en butée sur la surface interne 437 du manchon longitudinal 432 afin de remplir la fonction de palier de secours, sans que le débattement radial soit trop important.

De même que précédemment, en cas de rupture de l'arbre du compresseur 45, la surface amont 434 du disque de retenue 428 vient en butée sur la surface aval 435 du disque d'arrêt 433, qui assure une fonction d'arrêt axial de la soufflante en cas de rupture de l'arbre du compresseur 45. De même que précédemment, les deux portées 434, 435 mises en jeu peuvent être planes transverses, coniques ou sphériques.

## Revendications

1. Turboréacteur, comprenant une structure fixe, un rotor de soufflante (2), solidaire d'un arbre d'entraînement (5) supporté par un premier palier (6) et un deuxième palier (7), comprenant des moyens (28) formant retenue axiale du rotor de la soufflante (2) et/ou palier de secours, coopérant avec des moyens (32, 33) de la structure fixe, **caractérisé par le fait que** les moyens (28) formant retenue axiale du rotor de la soufflante et/ou palier de secours sont montés solidaires de l'arbre d'entraînement (5).

2. Turboréacteur selon la revendication 1, comprenant un flasque structurel (18) sur lequel est fixé le deuxième palier (7), dans lequel les moyens formant retenue axiale de la soufflante (2) et/ou palier de secours comportent un disque de retenue (28), monté sur l'arbre d'entraînement (5) et coopérant avec un disque d'arrêt (33) du flasque (18) pour la retenue axiale de la soufflante (2) et un manchon longitudinal (32) du flasque (18) pour former palier de secours.

3. Turboréacteur selon l'une des revendications 1 ou 2, dans lequel les moyens formant retenue axiale de la soufflante (2) et/ou palier de secours sont agencés pour transmettre les efforts axiaux directement à l'arbre d'entraînement (5).

4. Turboréacteur selon la revendication 3, dans lequel, le deuxième palier comprenant une bague interne (14), une bague externe (15) et des rouleaux (16) montés entre lesdites bagues (14, 15), le disque de retenue (28) comporte des dents radiales (28"), en appui axial sur des dents (26") de l'arbre d'entraînement (5) et bloquées en rotation par des dents longitudinales (14") de la bague interne (14) du deuxième palier (7).

## Claims

1. Turbo-jet engine, comprising a fixed structure, a fan rotor (2) integral with a drive shaft (5) supported by a first bearing (6) and a second bearing (7), comprising means (28) forming axial retaining means for the fan rotor (2) and/or forming an emergency bearing, cooperating with means (32, 33) of the fixed structure, **characterized by** the fact that the means (28) forming axial retaining means for the fan rotor (2) and/or forming an emergency bearing are mounted integral with the drive shaft (5).

2. Turbo-jet engine as in claim 1, comprising a structural flange (18) on which the second bearing is fixed (7), in which the means forming axial retaining means for the fan (2) and/or forming an emergency bearing comprise a retaining disk (28) mounted on the drive shaft (5) and cooperating with a stop disk (33) of flange (18) for axially retaining the fan (2) and with a longitudinal sleeve (32) of flange (18) to form an emergency bearing.

3. Turbo-jet engine as in either of claims 1 or 2, in which the means forming axial retaining means for the fan (2) and/or forming an emergency bearing are arranged to transmit axial stresses directly to the drive shaft (5).

4. Turbo-jet engine as in claim 3 in which, the second bearing comprising an inner ring (14), an outer ring (15) and rollers (16) mounted between said rings (14, 15), the retaining disk (28) comprises radial teeth (28") axially bearing upon teeth (26") of the drive shaft (5) and locked in rotation by longitudinal teeth (14") of the inner ring (14) of the second bearing (7).

## Patentansprüche

1. Turboluftstrahltriebwerk, umfassend eine feste Struktur, ein Gebläselaufrad (2), das mit einer Antriebswelle (5), die von einem ersten Lager (6) und einem zweiten Lager (7) getragen wird, fest verbunden ist, umfassend Mittel (28), die eine Axialhalterung des Laufrads des Gebläses (2) und/oder ein Ersatzlager bilden, die mit Mitteln (32, 33) der festen Struktur zusammenwirken, und **dadurch gekennzeichnet, dass** die Mittel, die eine Axialhalterung des Laufrads des Gebläses (2) und/oder ein Ersatzlager bilden, mit der Antriebswelle (5) fest verbunden angebracht sind.

2. Turboluftstrahltriebwerk nach Anspruch 1, umfassend einen Strukturflansch (18), auf dem das zweite Lager (7) befestigt ist, wobei die Mittel, die eine Axialhalterung des Gebläses (2) und/oder ein Ersatzlager bilden, eine Halterungsscheibe (28) umfassen, die auf der Antriebswelle (5) angebracht ist und mit einer Rastscheibe (33) des Flansches (18) für die Axialhalterung des Gebläses (2) und einer Längsmuffe (32) des Flansches (18), um ein Ersatzlager zu bilden, zusammenwirkt.

3. Turboluftstrahltriebwerk nach einem der Ansprüche 1 oder 2, wobei die Mittel, die eine Axialhalterung des Gebläses (2) und/oder ein Ersatzlager bilden, angeordnet sind, um die Axialkräfte direkt auf die Antriebswelle (5) zu übertragen.

4. Turboluftstrahltriebwerk nach Anspruch 3, wobei das zweite Lager einen Innenring (14), einen Außenring (15) und zwischen den Ringen (14, 15) angebrachte Rollen (16) umfasst, wobei die Halterungsscheibe (28) Radialzähne (28") umfasst, die sich axial auf den Zähnen (26") der Antriebswelle (5) abstützen und durch Längszähne (14") des Innenrings (14) des zweiten Lagers (7) drehfest gemacht werden.
